# EUROPEAN PATENT APPLICATION

(11) **EP 1 745 990 A1**
(43) Date of publication of application: **24.01.2007**
(21) Application number: 06013491.3
(22) Date of filing: 29.06.2006
(51) Int. Cl.: B60R 21/215, B60R 21/205

(54) **Airbag apparatus cover and airbag apparatus**

(30) Priority: 19.07.2005 JP 2005208739
(71) Applicant: TAKATA CORPORATION, Minato-ku, Tokyo 106-8510 (JP)
(72) Inventor: Hayashi, Shinji, Minato-ku Tokyo 106-8510 (JP)
(74) Representative: Vossius & Partner

(57) **Abstract**

An airbag apparatus is provided in which a door section is opened while being lifted only partly thereof, and a cover therefor. When an airbag 12 is inflated, a door section 24 of a module cover 20 starts to open while being separated into two strips of a first strip 24a and a second strips 24b. A door frame fixed boy 34 of a frame shape is provided at a peripheral portion of the door section of a module cover body 21, and a door frame movable body 32 is provided inside thereof so as to face only toward the lower side of the first strip 24a. The first strip 24a is lifted with the door frame movable body 32 by an inflating pressure of the airbag 12, and is cut apart from the module cover body 21 (Fig. 2).

## Description

The present invention relates to an airbag apparatus to be installed to a passenger seat and the like of a motor vehicle and, more specifically, to an airbag apparatus of a type in which a door is opened while lifting toward a vehicle cabin when an airbag is inflated. The present invention also relates to a cover for the airbag apparatus.

A passenger airbag apparatus to be installed in the motor vehicle includes a folded airbag, a retainer to which the airbag is mounted, an inflator (gas generator) for causing the airbag to be inflated, a module cover or a module cover door section or the like arranged on a front side of the retainer.

When the inflator generates gas, the airbag starts to be inflated, and the module cover or the module cover door section is torn along a tear line and opened by being pressed, and the airbag is deployed in the vehicle vehicle cabin for protecting a passenger.

An airbag apparatus which is configured in such a manner that a door section of the module cover starts to open while being lifted toward the vehicle vehicle cabin in order to cause the door section of the module cover to open smoothly when the airbag is inflated is disclosed in JP-A-2003-137054 (Patent Document 1).

Fig. 4 is a cross-sectional view of the airbag apparatus of the same patent document; Fig. 5 is a cross-sectional view of a state of operation thereof; and Fig. 6 is a perspective view of a door frame thereof.

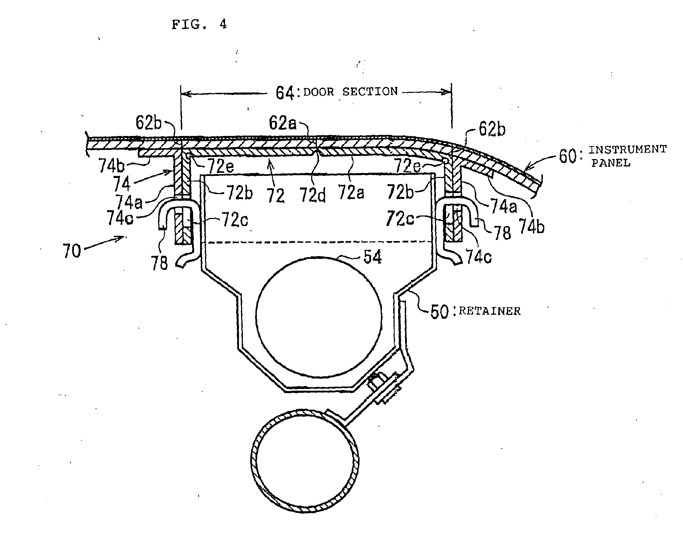

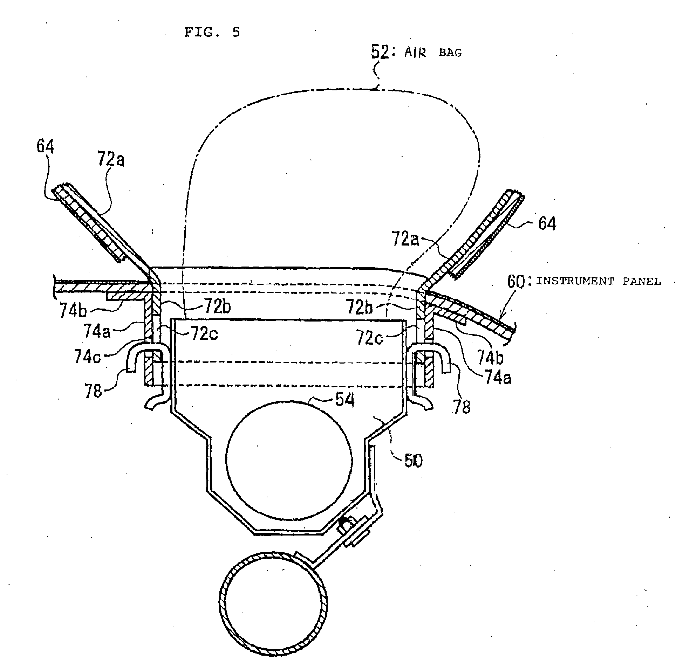

As shown in Fig. 4, an airbag 52 (Fig. 5) is folded and stored in a retainer 50 in the shape of a container opening on top, and is capable of being inflated by an inflator 54.

A module cover (instrument panel) 60 covers the retainer 50 from above thereof. The module cover 60 is provided with tear lines 62a, 62b formed of recessed ridges. The tear line 62b is provided so as to surround a periphery of the retainer 50 along an upper edge thereof, and the inner area of the surrounding tear line 62b corresponds to a door section 64. The tear line 62a extends so as to across vertically a center of the door section 64.

A door frame 70 including a door frame movable body 72 and a door frame fixed body 74 is provided on a back surface of the module cover 60. The door frame fixed body 74 has a rectangular shape, and the door frame movable body 72 is slidably fitted to the inner side of thereof.

The door frame movable body 72 includes a lining plate section 72a which is overlapped with the door section 64 of the module cover 60 and leg strips 72b as leg portions which extend upright from both sides of the lining plate section 72a downward in the drawing. The leg strip 72b is formed with a hooking hole 72c. The lining plate section 72a is formed with a tear line 72d in a positional relation which is overlapped with the tear line 62a. A hinge groove 72e formed of a recessed ridge is provided along intersecting corners between the lining plate section 72a and the leg strip 72b.

The lining plate section 72a is secured to the back surface of the door section 64 of the module cover 60 by vibration welding.

The door frame fixed body 74 includes a leg frame 74a as rectangular shaped leg portion which surrounds an outer periphery of the retainer 50, and a flange section 74b extending outward from an upper edge of the leg frame 74a. The flange section 74b is vibration-welded to a peripheral portion of the door section 64 of the module cover 60. The leg frame 74a is provided with hooking holes 74c.

A hook-shaped hook 78 secured to the retainer 50 is inserted into the hook holes 72c and 74c.

When the inflator 54 injects gas, as shown in Fig. 5, the door frame movable body 72 moves upward (lifting operation) by being pressed upward by the inflating airbag 52. The module cover 60 is broken along the tear line 62b, and the door section 64 is cut off from the module cover 60 therearound. The door section 64 moves further upward with the door frame movable body 72 and is pressed by the airbag 52, whereby the tear line 72d of the lining plate section 72a and the tear line 62a of the door section 64 are broken, the door section 64 starts to open like a door while being separated toward the left and right direction in Fig. 5, and the airbag 52 is inflated in the vehicle cabin.

By the lifting action and separation of the door section 64 from the module cover 60 therearound, the door section 64 starts to open smoothly without receiving a reaction force due to deformation of the module cover 60 therearound.

In the airbag apparatus in JP-A-2003-137054 shown in Fig. 4 to Fig. 6, when the airbag is inflated, the door frame movable body 72 which occupies the entire area of the door section 64 is lifted, an inflating pressure of the airbag required for smooth lifting operation becomes high, and hence an inflator with a high output is required.

It is an object of the present invention to provide an airbag apparatus of a type in which only part of a door section is lifted to open the door section and a cover therefor.

An airbag apparatus cover in Claim 1 includes an interior panel for constituting part of an inner surface of a vehicle cabin, a door section which is formed on the interior panel and segmented into a plurality of strips that starts to open toward the vehicle cabin side respectively by being rotated like a door segmented into a plurality of strips, so that the door section starts to open while being lifted upon inflation of an airbag, and is characterized in that part of the strips are liftable strips which can be lifted, and the remaining strips are non-lifting strips which are not lifted.

In addition to Claim 1, the airbag apparatus cover according to Claim 2 includes a door frame arranged on a back side of the door section, and the door frame including a door frame movable body having a first lining plate section secured to a back surface of the liftable strip and a leg portion projecting upright from a side edge of the first lining plate section on the side of the proximal end of rotation at the time when the first lining plate section is opened, and a door frame fixed body having a flange section secured to a peripheral portion of the door section of the interior panel and the leg portion projecting upright from the flange section, characterized in that the leg portion of the door frame movable body and the leg portion of the door frame fixed body are arranged so as to oppose to each other.

In addition to Claim 2, the airbag apparatus cover according to Claim 3, the door frame fixed body is integrally provided with a second lining plate section secured to a back surface of the non-lifting strip.

An airbag apparatus according to Claim 4 including the airbag apparatus cover according to any one of Claims 1 to 3, a retainer arranged so as to face to a back side of the interior panel, an airbag stored in the retainer, and an inflator for inflating the airbag, characterized in that the leg portion of the door frame movable body and the leg portion of the door frame fixed body are engaged with the retainer via an engaging member.

In the airbag apparatus according to the present invention, when the inflator injects gas, only the liftable strip of the door section is lifted by being pressed upward by the inflating airbag. Therefore, the airbag inflation pressure for lifting operation can be reduced.

In the case of the structure as in Claim 2, the door frame movable body on a back side of the liftable strip moves upward (lift operation) upon inflation of the airbag, and the liftable strip is cut apart from the interior panel therearound to be opened like the door while moving upward with the door frame movable body, and the airbag is inflated in the vehicle cabin. In this manner, by the lifting operation of the liftable strip, and thus the separation of the same from the interior panel therearound, the liftable strip can be opened smoothly without receiving a reaction force due to deformation of the interior panel therearound.

In the present invention, as stated in Claim 3, when the second lining plate section is provided on the door frame fixed body and the second lining plate section is secured to a back side of the remaining non-lifting strips of the door section, the non-lifting strip is reinforced by the second lining plate section.

Referring now to the drawings, an embodiment will be described.
Fig. 1 is a cross-sectional view of an airbag apparatus and an enlarged view of a part thereof according to an embodiment;
Fig. 2 is a cross-sectional view of the airbag apparatus in Fig. 1 when being operated;
Fig. 3 shows a perspective view of a door frame and a perspective view of a leg plate of a door frame movable body thereof in the airbag apparatus shown in Fig. 1;
Fig. 4 is a cross-sectional view of an airbag apparatus in the related art;
Fig. 5 is a cross-sectional view of the airbag apparatus shown in Fig. 4 when being operated; and

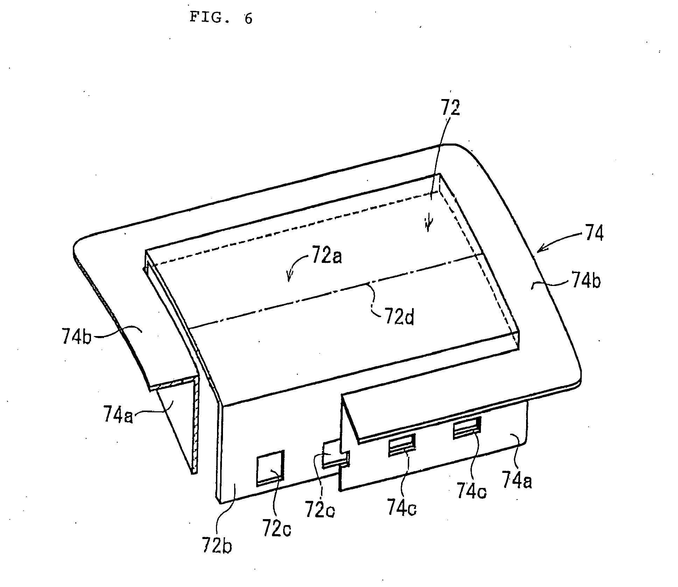

Fig. 6 is a perspective view of a door frame in the airbag apparatus in Fig. 4.

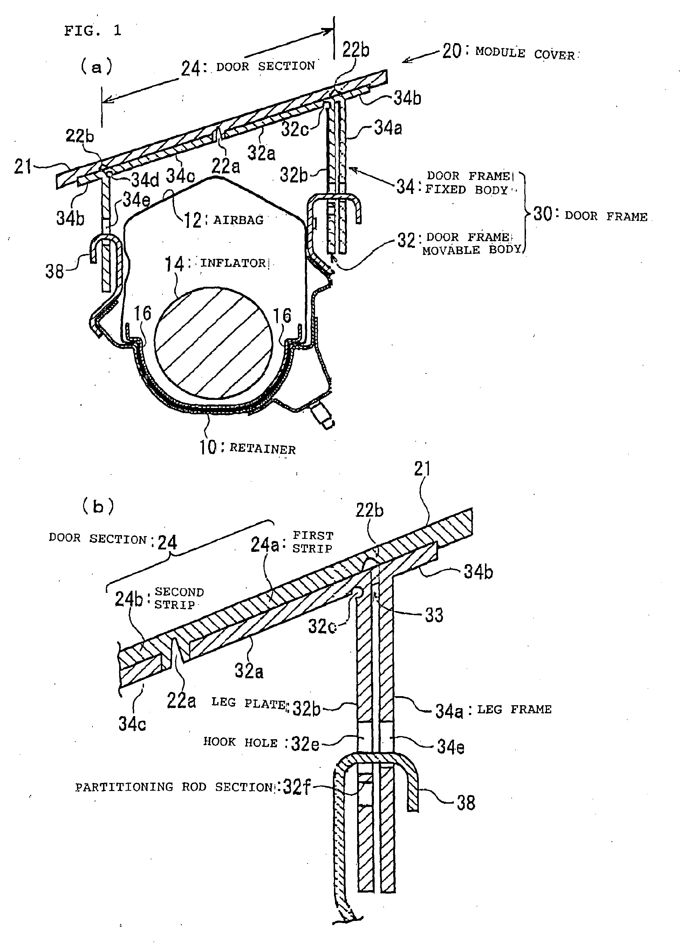

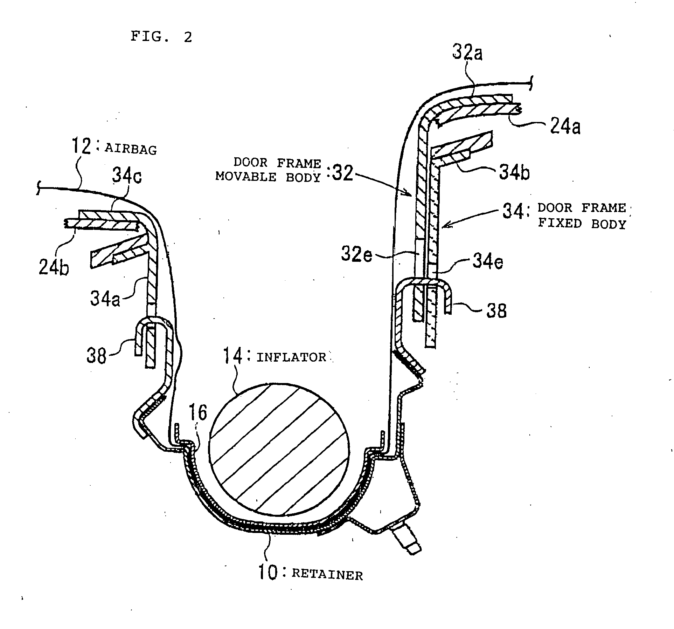

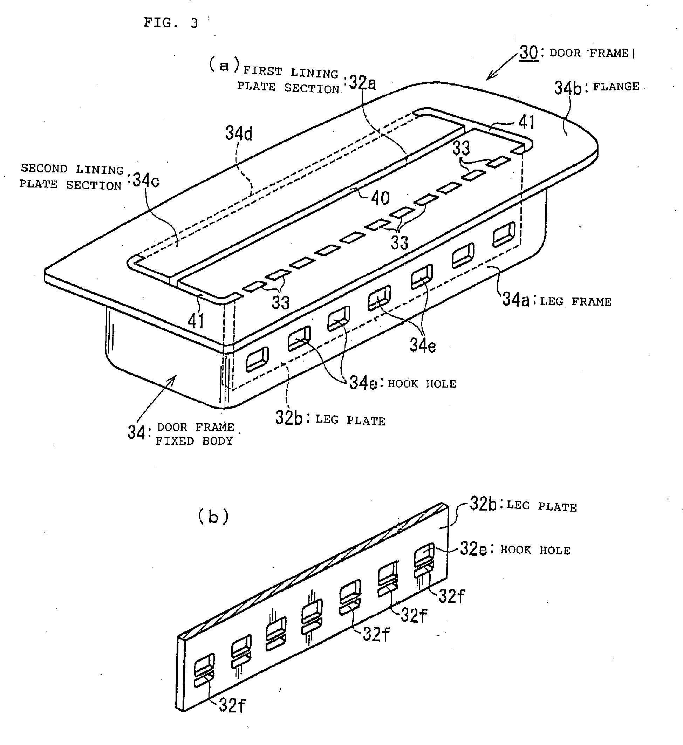

Fig. 1(a) is a vertical cross-sectional view of an airbag apparatus according to the embodiment; Fig. 1(b) is an enlarged view of a part thereof; Fig. 2 is a cross-sectional view of the airbag apparatus in Fig. 1 when being operated; Fig. 3(a) is a perspective view of a door frame; Fig. 3(b) is a perspective view of a leg portion of a door frame movable body. In description below, the term "fore-and-aft direction" indicates the fore-and-aft direction of the vehicle in which the airbag apparatus is installed on a vehicle, and the term "lateral direction" indicates the direction of width of the vehicle.

The airbag apparatus is a passenger airbag apparatus to be installed in an instrument panel, in which an airbag 12 is folded and stored in a retainer 10 in the shape of a container opening on top, and is inflatable by an inflator 14. The airbag 12 is mounted to the retainer 10 by a mounting bracket 16.

A module cover 20 is mounted to the retainer 10. The module cover 20 includes a module cover body 21 for covering above the retainer, and a door frame 30 including a door frame movable body 32 and a door frame fixed body 34 secured to a back surface of the module cover body 21. The door frame fixed body 34 is of a rectangular shape and the door frame movable body 32 is arranged inside thereof.

Provided on the back surface of the module cover body 21 are tear lines 22a, 22b formed of recessed ridges. The tear line 22b is provided so as to surround an upper edge of the retainer 10, and the area on the inner side of the tear line 22b corresponds to a door section 24. The tear line 22a is extended so as to across laterally a center of the door section 24.

As shown in Fig. 1(a), an upper surface of the module cove body 21 is inclined from the front side of the vehicle, that is, from a windshield side (left side of the drawing) upwardly toward the rear side of the vehicle, that is a passenger side (rightward in the drawing). A peripheral edge of the module cover body 21 is protruded laterally outward from the upper edge of the retainer 10. Therefore, as shown in the drawings, the edge portion of the module cover body 21 on the rear side of the vehicle is located at a higher level than the edge portion of the door section 24 on the rear side of the vehicle, and the edge portion of the module cover body 21 on the front side of the vehicle is located at a lower level than an edge portion of the door section 24 on the front side of the vehicle.

When the airbag 12 is inflated, the door section 24 is torn along the tear lines 22a, 22b due to the inflating pressure, is separated into two strips; a first strip 24a on the rear side (the passenger side) of the vehicle with respect to the tear line 22a; and a second strip 24b on the front side (the windshield side) of the vehicle with respect to the tear line 22a, and starts to open like a door.

In this embodiment, the first strip 24a is a liftable strip and the second strip 24b is a non-lifting strip.

The door frame movable body 32 includes a first lining plate section 32a secured to a back surface of the first strip 24a, and a leg plate 32b formed into the rectangular shape as a leg portion extending upright from an edge portion of the first lining plate section 32a on the rear side of the vehicle downward. The first lining plate 32a has a size which only occupies the first strip 24a of the door section 24. A hinge groove 32c formed of a recessed ridge is provided along an intersecting corner of the first lining plate section 32a and the leg plate 32b.

The leg plate 32b is provided with a hook hole 32e. The hook hole 32e has a shape elongated in the direction of movement of the door frame movable body 32 (that is, the direction perpendicular to the back surface of the module cove body 21). In this embodiment, the hook hole 32e is provided with a partitioning rod section 32f on the door frame movable body 32 on the way to the movable direction.

The door frame fixed body 34 includes a leg frame 34a as the rectangular shaped leg portion which surrounds an outer periphery of the retainer 10, a flange section 34b extending outward from an upper end of the leg frame 34a, and a second lining plate section 34c arranged on the back side of the second strip 24b so that the edge portion thereof on the front side of the vehicle continues from an upper edge of the leg frame 34a on the front side of the vehicle. The flange section 34b is secured to the back surface of the module cover body 21 around the door section 24, and the second lining plate section 34c is secured to a back surface of the second strip 24b.

The second lining plate section 34c has a size which occupies only the second strip 24b of the door section 24. A hinge groove 34d formed of a recessed ridge is provided along an intersecting corner of the second lining plate section 34c and the leg frame 34a.

The respective surfaces of the leg frame 34a on the rear and front sides of the vehicle are formed with hook holes 34e. Among these hook holes 34e, the hook holes 34e provided on the surface of the leg frame 34a on the rear side of the vehicle are arranged at positions which overlap with the hooks 32e provided on the leg plate 32b of the door frame movable body 32.

A slit-shaped clearance 40 (Fig. 3) exists between an edge portion of the first lining plate section 32a on the front side of the vehicle and an edge portion of the second lining plate section 34c on the rear side of the vehicle. A tear line 22a is provided on the back surface of the module cover body 21 so as to be overlapped with the clearance 40. As shown in Fig. 3, slit-shaped clearances 41, 41 also exist between left and right edge portions of the lining plate sections 32a, 34c and left and right inner surfaces of the leg frame 34a respectively. Both ends of the clearance 40 communicate respectively with the clearances 41, 41.

A hook-shaped hook 38 secured to the retainer 10 is inserted into the hook holes 32e, 34e, and the door frame movable body 32 and the door frame fixed body 34 are engaged with the hook 38, whereby the module cover 20 is mounted to the retainer 10.

In this embodiment, the door frame movable body 32 and the door frame fixed body 34 which constitute the door frame 30 are continuously and integrally formed of the same material. The leg plate 32b of the door frame movable body 32 is opposed to the inner surface of the leg frame 34a of the door frame fixed body 34 on the rear side of the vehicle with the intermediary of a slight clearance. Although the leg plate 32b and the proximal side (upper end side of the vehicle) of the leg frame 34a are continuously formed, slits 33 like a scored line are provided linearly at predetermined intervals therebetween. The slits 33 constitute a low-strength portion along which the door frame 30 is torn upon lifting of the door frame movable body 32.

The module cover 20 is integrally formed by two-color molding. For example, in a metal mold having a core mold and a cavity mold, the door frame 30 is formed first by injection molding, then the metal mold is replaced by the cavity mold, and then the module cover body 21 is formed by injection molding so as to continue to the door frame 30.

At the time of injection molding, in particular, by forming the module cover using a functional low pressure injection molding mold having a heat reserving layer (ULPAC metal mold), generation of molding sinks on the surface of the module cover is prevented, and hence the module cover with good appearance can be obtained.

The operation of the airbag apparatus provided with the module cover 20 is as follows.

When the inflator 14 injects gas, as shown in Fig. 2, the door frame movable body 32 is moved upward (lifting operation) by being pressed by the inflating airbag 12 upward. The hook 38 moves relatively downward in the drawing in the hook hole 32e when the door frame movable body 32 is lifted, and hence the partitioning rod section 32f is deformed or broken. The door frame 30 is torn along the slit 33.

The tear lines 22a, 22b are torn by the inflated pressure of the airbag 12, and the door section 24 is separated into the first strip 24a and the second strip 24b. In this case, the first strip 24a lined by the lining plate section 32a which continues to the door frame movable body 32 is moved upward together with the door frame movable body 32. On the other side, the second strip 24b lined by the lining plate section 34c continuing to the door frame fixed body 34 is not lifted.

Along with the progress of inflation of the airbag 12, the first strip 24a, being pressed by the airbag 12, starts to open by being rotated toward the rear side of the vehicle about the hinge groove 32c as a base point together with the lining plate section 32a, and the second strip 24b starts to open by being rotated toward the front side of the vehicle about the hinge groove 34d as a base point together with the lining plate section 34c.

In this embodiment, the edge portion of the module cover body 21 on the rear side of the vehicle is located at a higher level than an edge portion of the first strip 24a on the rear side of the vehicle. However, since the first strip 24a is lifted upward and starts to open toward the rear side of the vehicle, it can start opening largely toward the rear side of the vehicle (to an angle closer to the horizontal direction than the inclination of the edge portion of the module cover body 21 or to an angle which defines a downward inclination toward the rear side of the vehicle.

Since the first strip 24a separates from the module cover body 21 therearound by this lifting operation, the first strip 24a can open smoothly without receiving a reaction force due to deformation of the module cover body 21 therearound.

As in this embodiment, since the first strip 24a of the door section 24 arranged on the rear side, that is, on the side of the occupant seated on the passenger seat of the vehicle, is lifted and starts to open largely and smoothly toward the occupant seated on the passenger seat, the airbag 12 can easily be deployed toward the occupant seated on the passenger seat.

In this module cover 20, only the first strip 24a side of the door section 24 is operated, and hence the inflation pressure of the airbag 10 for this lifting operation can be reduced. Accordingly, a relatively low output inflator 14 can be used.

The module cover 20 of this airbag apparatus includes the door frame 30 including the door frame movable body 32 and the door frame fixed body 34, and the module cover body 21 formed integrally by the two-color molding, and hence it can be manufactured easily. Since the door frame movable body 32 and the door frame fixed body 34 can be formed integrally and continuously, preferable positional accuracy and dimensional accuracy are achieved.

The above-described embodiment is shown simply by way of example, and the present invention is not limited to the above-described embodiment.

Although the module cover 20 is shown as the interior panel in this embodiment, it may be an instrument panel or the like.

Although the upper surface of the module cover 20 is inclined so that the rear side of the vehicle (that is, on the side of the occupant seated on the passenger seat) is higher than the front side of the vehicle(that is, the windshield side) in the embodiment described above, the upper surface of the module cover 20 (or the instrument panel or the like) may be flat (substantially horizontal), or may be inclined so that the front side of the vehicle is higher than the rear side of the vehicle in the present invention.

When the upper surface of the module cover or the instrument panel or the like is inclined, the first strip of the door section which is lifted upon inflation of the airbag may be positioned on the higher side of the inclination, and may also be positioned on the lower side of the inclination. However, the first strip which is lifted is preferably arranged on the side of the door section nearer to the passenger.

The second strip of the door section which is not lifted may be configured to rotate and start opening while coming apart from the module cover or the instrument panel or the like as in the case of the above-described embodiment, and may also be configured to state to open while rotating like a hinge in a state of being continued from the module cover or the instrument panel or the like.

In the above-described embodiment, the door section is configured to be segmented into two strips, and one of which is the liftable strip and the other is non-lifting strip. However, in the present invention, a structure in which the door section is segmented into three or more strips, and part of them are liftable strips and at least one remaining strip is the non-lifting strip may also be employed.

The above-described embodiment is an example of application of the present invention to the passenger seat airbag apparatus for the motor vehicle. However, the present invention can be applied to other various types of airbag apparatus.

## Claims

1. An airbag apparatus cover comprising:
an interior panel for constituting part of an inner surface of a vehicle vehicle cabin, and
a door section which is formed on the interior panel and segmented into a plurality of strips that starts to open toward the vehicle vehicle cabin side respectively by being rotated like a door, so that the door section starts to open while being lifted upon inflation of an airbag,
**characterized in that** part of the strips are liftable strips which can be lifted, and the remaining strips are non-lifting strips which are not lifted.

2. The airbag apparatus cover according to Claim 1 comprising:
a door frame arranged on a back side of the door section, and the door frame including a door frame movable body having a first lining plate section secured to a back surface of the liftable strip and a leg portion projecting upright from a side edge of the first lining plate section on the side of the proximal end of rotation at the time when the first lining plate section is opened; and
a door frame fixed body having a flange section secured to a peripheral portion of the door section of the interior panel and the leg portion projecting upright from the flange section,
**characterized in that** the leg portion of the door frame movable body and the leg portion of the door frame fixed body are arranged so as to oppose to each other.

3. The airbag apparatus cover according to Claim 2, **characterized in that** the door frame fixed body is integrally provided with a second lining plate section secured to a back surface of the non-lifting strip.

4. An airbag apparatus comprising:
the airbag apparatus cover according to any one of Claims 1 to 3,
a retainer arranged so as to face to a back side of the interior panel,
an airbag stored in the retainer, and
an inflator for inflating the airbag,
**characterized in that** the leg portion of the door frame movable body and the leg portion of the door frame fixed body are engaged with the retainer via an engaging member.
